# EUROPEAN PATENT SPECIFICATION

(11) **EP 2 289 730 B1**
(45) Date of publication and mention of the grant of the patent: **05.04.2017**
(21) Application number: 10013018.6
(22) Date of filing: 24.02.2006
(51) Int. Cl.: B60K 35/00, B60K 37/06, G05G 1/02, G05G 1/08, G05G 9/047

(54) **Multifunction input device**
Multifunktionseingabegerät
Dispositif d'entrée multifonction

(43) Date of publication of application: 02.03.2011
(62) Divisional of application: 06003851.0
(73) Proprietor: Harman Becker Automotive Systems GmbH, 76307 Karlsbad (DE)
(72) Inventor: Peißner, Maria, 80804 München (DE); Metternich-Heider, Barbara, 70794 Filderstadt (DE); Roessger, Peter, Dr., 72631 Aichtal (DE); Preißner, Olaf, 73230 Kirchheim unter Teck (DE); Fritz, Sandra, 70794 Filderstadt (DE); Johannsen, Ulrike, 70565 Stuttgart (DE)
(74) Representative: Grünecker Patent- und Rechtsanwälte PartG mbB

(56) References cited:
- WO-A1-02/40307
- WO-A1-2005/077701
- DE-A1- 10 012 753
- DE-A1- 10 105 177
- DE-A1- 19 951 379
- DE-U1- 20 301 434
- US-A- 5 530 455
- US-B1- 6 522 321
- US-B1- 6 590 564

## Description

The present invention relates to an assembly comprising a plurality of systems of a power driven vehicle and a multifunction input device for operating the plurality of systems.

A generic multifunction input device is known from EP 0 893 750 B1. The input device comprises a knob which is rotatable about its axis, pivotable and axially movable.

Such input devices are offered in lots of cars. However, it appears that this input device does not in any case accommodate with the driver's wishes as to handling.

In DE 100 12 753 A1 an operation device comprising touch surfaces, operation elements and switching elements is described. A computer mouse for facilitating operation of a window's operating system software and comprising touch buttons and a wheel button is described in US 5 530 455. In US 6 522 321 a computer mouse for facilitating the operation of three dimensional computer software and comprising touch buttons and a wheel button is described.

It is the object of the present invention to provide an assembly comprising a multifunction input device which can be simply constructed and can be operated easily although it allows a good selection function within a plurality of systems of a power driven vehicle.

According to the present invention, the object is solved by an assembly comprising a multifunction input device having the features of independent claim 1.

Surprisingly, the input device can be operated easily and precisely although its multipart structure provides touch surfaces being accessible for the driver and being movable relative to each other. The driver can stay concentrated on the traffic while making his selection within the plurality of system functions of the vehicle. Nevertheless, the arrangement of the main part and the relatively hereto rotatable rotational element can be realised in a simple construction.

In a preferred embodiment, the main part may comprise a hand rest. The hand rest allows comfortable operation of the rotation element. Further it disburdens the driver's attention for operating the input device. If the driver's hand has found its place on the input device it is no longer necessary that the driver controls the position of his hand.

Advantageously, the main part may comprise at least one button. Hereby, the space on the main part can be used efficiently, i.e. a compact arrangement of input elements of the input device can be achieved, and the button can be easily found.

The rotation element is movable with respect to the main part in a press button-like manner. This provides for a further possibility of input in addition to the selection due to the rotative position of the rotation element. That is, the rotation element has an integrated functionality.

Preferably, the rotation element may be arranged at or near a margin of the main part. In this position the rotation element can be easily operated with a finger tip.

Favourably, the outer dimension of the touch surface of the rotation element may correspond to an operating area of a finger of a hand resting with respect to the input device. Hereby, any position of the touch surface can be reached by the finger. This means that the rotation element can be rotated continuously in all its rotation positions wherein the finger can keep in touch with the rotation element.

Advantageously, the touch surface of the rotation element may have a diameter in the range of about 1 cm to 9 cm, preferably in the range of about 1 cm to 4 cm. In the diameter range of about 1 cm to 9 cm the rotation element can be operated with good precision by a finger. In a diameter range of about 1 cm to 4 cm the touch surface can be operated by finger motions in a particularly comfortable range.

The main part and the rotation element are movable together with respect to a basis carrying the selection unit. Hereby, further selection can be made in addition to the selection according to the rotative position of the rotation element.

The main part and the rotation element are together transversely shiftable with respect to the basis. This allows an operation movement which can be easily distinguished by an operator from the rotative selection movement of the rotation element.

Favourably, the touch surface of the main part may have a general dome-like shape, preferably a spherical calotte-like shape. This provides for a good orientation of a driver's hand on the input device.

Particularly advantageous, the touch surface of the rotation element may have a shape generally setting forth the shape of the touch surface of the main part. Hereby, the main part and the rotation element together have a generally dome-like, preferably calotte-like shape providing for a good orientation of a driver's hand on the input device.

The rotation axis of the rotation element is inclined with respect to a middle axis of the shape of the touch surface of the main part. Hereby, a good operability of the rotation element is supported, especially when the rotation element is rotated by a finger tip being moved within an operating area of the finger.

The rotational axis is transverse to the middle axis. This allows a good operability of the rotation element, especially by using a longitudinal side of a finger.

Comparative examples of input devices and an input device being part of an assembly according to the invention are shown in the drawing and are described below. In the drawing, the following is shown:
- Fig. 1: is a top view of an input device not being part of the present invention,
- Fig. 2: is a side view of the input device of Fig. 1,
- Fig. 3: depicts schematically the functions of the input device as shown in Figs 1 and 2,
- Fig. 4: is a top view of an input device not being part of the present invention,
- Fig. 5: is a side of the input device as shown in Fig. 4,
- Fig. 6: is a perspective view on an input device not being part of the present invention,
- Fig. 7: shows the input device of Fig. 6 during use,
- Fig. 8: is a top view of an input device not being part of the present invention,
- Fig. 9: is a schematic top view of aninput device of an embodiment of the inventive assembly, and
- Fig. 10: is a partial sectional view of the input device shown in Fig. 9.

In the present description the same reference signs are used for analogue parts in the different comparative examples and the embodiment.

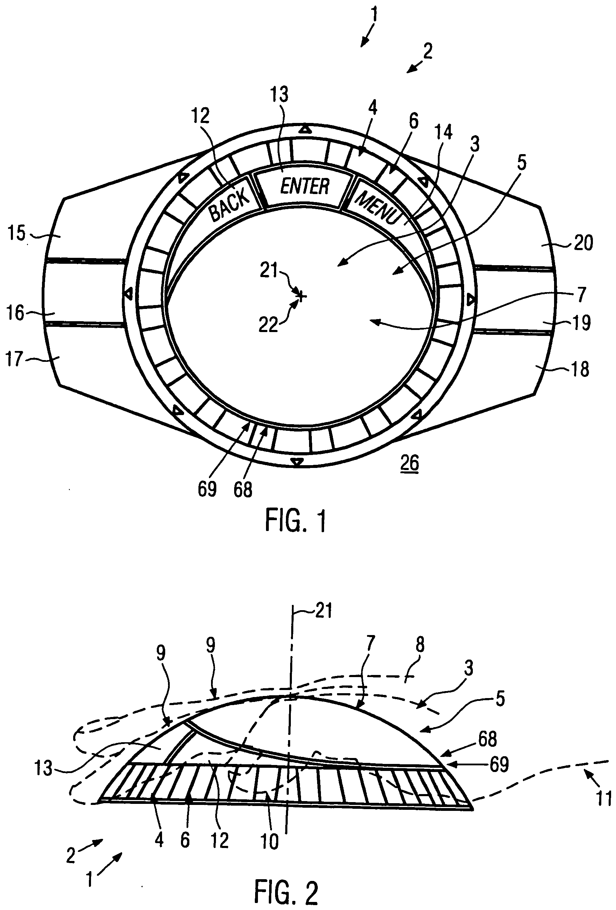

Fig. 1 shows a multifunction input device 1 according to a comparative example in a top view. The input device 1 serves to operate a plurality of systems of a not shown power driven vehicle. The plurality of systems may comprise for instance an air-conditioning system, a navigation system, a board computer, a communication system, e.g. a mobile telephone system, an entertainment system, e.g. an audio system, and so on.

The input device 1 comprises a selection unit 2 by means of which the driver can make a selection within the options and functions of the plurality of systems. The selection unit 2 comprises a main part 3 and a rotation element 4 being rotatable relative to the main part 3. Each of the main part 3 and the rotation element 4 comprises a touch surface 5, 6 being accessible during use of the input device 1. That is, the touch surface 6 of the rotation element 4 is rotatable relative to the touch surface 5 of the main part 3. This means that the input device has a multipart structure accessible to the user.

The main part 3 comprises a hand rest 7 on which a hand 8 may rest while operating the input device as shown in Fig. 2. This provides for a comfortable use of the input device as the fingers 9, 10 and the associated arm 11 are disburdened from carrying the weight of the hand and arm. This makes it possible to operate the input device in a relaxed manner.

The whole main part may serve as a hand rest, i.e. the whole touch surface of the hand rest might be the whole touch surface of the main part. However, it is possible that the main part 3 comprises at least one further part, e.g. at least one button The main part 3 -comprises three buttons 12, 13, 14 which are arranged adjacent to the hand rest 7, namely between the hand rest 7 and the rotation element 4. It is also possible to arrange one or more buttons in a manner surrounded by a part of the hand rest 7.

At least one button may be arranged in an area of the main part 3 in which at least one finger 9, 10 of the hand 8 is positioned when the input device 1 is operated. All buttons 12, 13, 14 are arranged in an area which can be covered by fingers 9, 10. Hereby, the buttons can be operated easily wherein only a slight movement of the associated finger 9, 10 is necessary.

The rotation element 4 has a ring-like shape. The touch surface 6 of the rotation element 4 is arranged surrounding the touch surface 5 of the main part 3. The main part 3 serves as a centre part around which the rotation element 4 is rotatable.

The input device may comprise at least one further button which is arranged near the selection unit. Six additional buttons 15-20 are provided partially surrounding the rotation element as shown in Fig. 1.

The touch surface 5 of the main part 3 may have a general dome-like outer shape. In the example shown in Fig. 2 it has a spherical calotte-like shape. The touch surface 6 of the rotation element 4 has an outside shape generally setting forth the shape of the touch surface 5 of the main part 3. That is, the main part 3 and the rotation element 4 have together a generally dome-like outer shape which is a spherical calotte-like outer shape.

The outside shape of the main part 3 has a middle axis 21 and the rotation element 4 has a rotation axis 22. The middle axis 21 and the rotation axis 22 are coincident with each other. It is also possible to provide them parallel to each other.

By the provision of the generally dome-like outside shape of the main part is hand is well supported by the main part, especially as the dome-like outside shape corresponds to the hand hole as well as to a relaxed attitude of the hand.

By the dome-like outside shape and the parallel or coincident of the axis 21, 22 the hand is well guided when it is rotated relative to the main part when the rotation element is rotated.

It is possible to provide the main part with a substantially flatter outside shape than shown in Fig. 2.

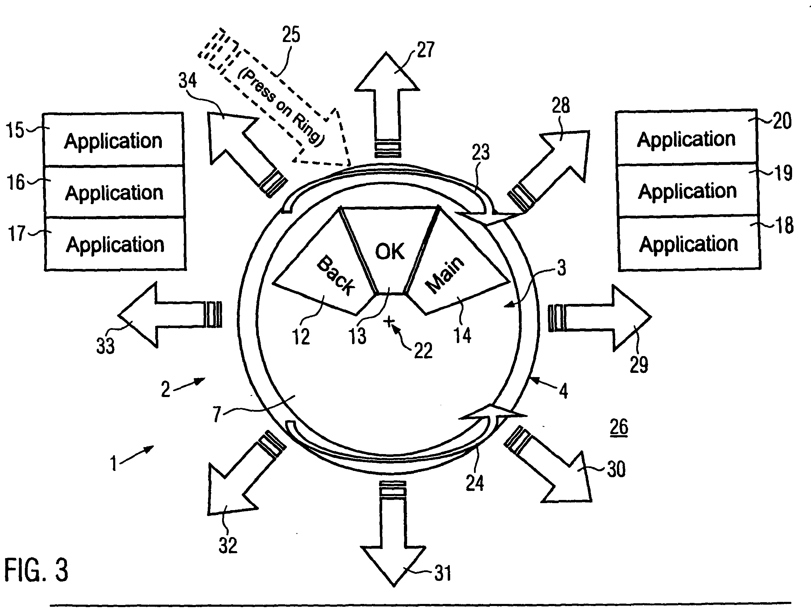

The functionality of the input device schematically illustrated in Fig. 3. The rotation element 4 is bidirectionally rotatable as indicated by the arrows 23 and 24, preferably the rotation element 3 can be continuously rotated by 360° or more.

The rotation element 4 can be provided movable with respect to the main part 3 in a press button-like manner as indicated by the arrow 25 with dashed lines. This provides an input functionality in addition to the selection made via the rotation of the rotation element 4. It is possible to use the press button-like movability of the rotation element 4 as a "okay" function. However, it is also possible that - if provided - one the buttons 12-20 is used for the "okay" function, preferably, one of the buttons 12-14 of the main part 3. Advantageously, the central one 13 of these buttons is used therefor.

The press button-like movement can be a transverse shift movement, e.g. traverse to or along the rotational axis 22 of the rotation element, and/or a pivoting movement around an axis different to said rotational axis 22.

The main part 3 and the rotation element 4 might be movable together with respect to a basis 26 carrying the selection unit 2. The additional movement is possible in at least one direction. The main part and the rotation element are movable together in eight directions as indicated by arrows 27-34 in Fig. 3. By a movement in the respective direction a selection is made.

The main part and the rotation element are together movable transversely shiftable with respect to the basis 26.

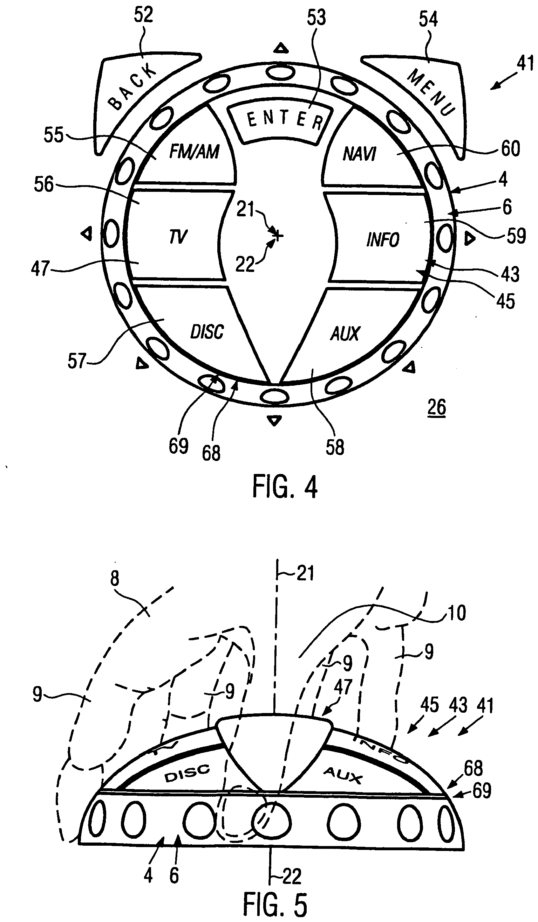

In Fig. 4 and 5 a multifunction input device 41 according to a comparative example is shown. The differences of this input device 41 to the above-described input device are described below.

The input device 41 has a main part 43 with a stepped touched surface 45. A hand rest 47 of the main part 43 projects outwardly from the remaining outside surface of the main part as shown in Fig. 5.

The main part 43 comprises a plurality of buttons 53, 55, 56, 57, 58, 59, 60. One 53 of them is surrounded by the hand rest 47 as shown in Fig. 4. The remaining buttons 55, 56, 57, 58, 59, 60 are arranged adjacent to the hand rest, namely between the hand rest 47 and the rotation element 4. The buttons are arranged symmetrically wherein three buttons 55, 56, 57 are arranged on one side of the hand rest 47 and the further three buttons 58, 59, 50 are arranged on the other side of the hand rest 47. This arrangement provides a grouping of the buttons.

By providing the button 53 surrounded by the hand rest 47 the button is prevent from being pressed accidentally. Therefore, it can be used for a special function, e.g. a function used in connection with the selection made with the other selection elements. Such a special function can be the "okay" function.

Outside the ring-like rotation element 4 the input device 41 comprises two additional buttons 62 and 54.

As shown in Fig. 5, it is possible to operate the input device with the hand hole being distanced to the hand rest 47.

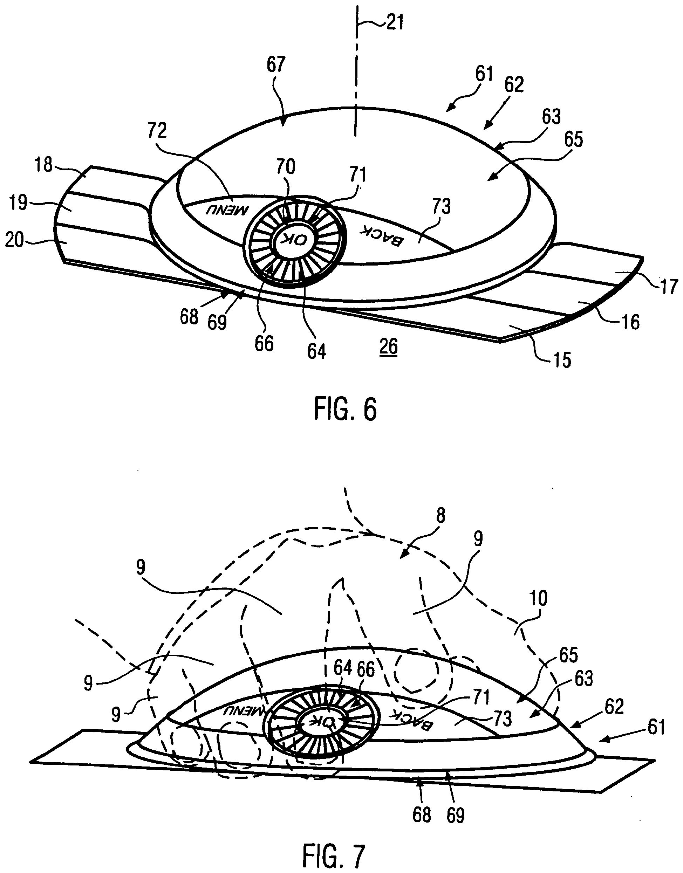

In Figs 6 and 7 a multifunction input device 61 according to a comparative example. In the following, the differences of this input device 61 to the above-described input device 1.

The input device 61 comprises a selection unit 62 with a main part 63 and a rotation element 64 wherein the rotation element 64 is arranged offset with respect to a middle of the main part 63. Therein, the rotation element 64 is arranged near a margin 68 of the main part 63 wherein the rotation element 64 is surrounded by the touch surface 65 of the main part 63 as shown in Fig. 6. It is also possible to arrange the rotation element 64 aligning with an outer edge 69 of the main part 63 or projecting from this outer edge 69.

The not shown rotational axis of the rotation element 64 is inclined with respect to the middle axis 21 of the main part 63.

The rotation element 64 has a ring-like shape and is rotatable about a centre part 70. The centre part 70 may comprise one or more buttons. The centre part 70 comprises one button 71 generally covering the area surrounded by the ring-like shaped rotation element 64. Preferably, the button 71 has a special function such as an "okay" function. Hereby, a finger rotating the rotation element 64 for making a selection can easily press the button 71 with a small movement.

Fig. 7 shows the input device 61 in use. The hand 8 is in general in the intended position for operating the input device 61. With respect to this orientation of the hand 8 the rotation element 64 is arranged at a front part of the selection unit 62. The rotation element 64 can preferably be operated by the middle finger of the hand and/or the adjacent fingers.

The outer dimensions of a touch surface 66 of the rotation element correspond to the operating area of the associated finger or fingers for operating it. Hereby, the finger rotating the rotation element 64 can stay on its touch surface 66 while rotating the rotation element 64 continuously, e.g. 360° or more.

Preferably, the touch surface 66 of the rotation element 64 may have a diameter in the range of about 1 cm to 9 cm which are practical dimensions. More preferably, it has a diameter in the range of about 1 cm to 4 cm which allows a comfortable operation of the rotation element 64 while still allowing the rotation element 64 to be positioned precisely.

It is also possible to provide the rotation element in a disc-like shape. It might be movable in a press button-like manner as described above, especially in a manner along its rotational axis. Hereby, it can fulfil the function of the button 71 associated with the ring-like shaped rotation element 64. It is also possible to provide the ring-lik shaped rotation element 64 as being movable in said press button-like manner(s).

The main part 63 comprises two further buttons 72, 73 arranged on two sides of the rotation element adjacent to same. These buttons can be easily operated by the finger operating the rotation element 64 or the fingers adjacent to this finger.

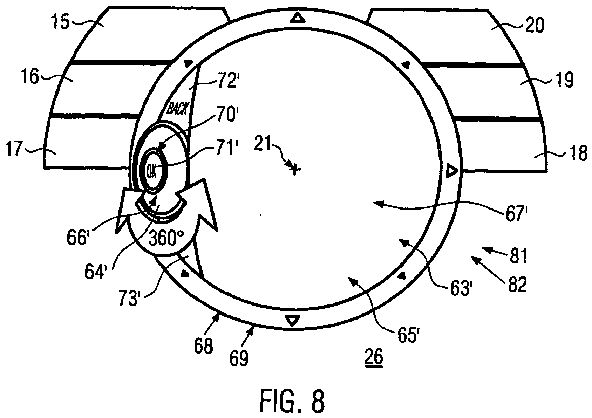

Fig. 8 shows a multifunction input device 81 according to a comparative example. To this input device 81 the same applies as outlined with respect to the input device 61 described with reference to Figs. 6 and 7 except to the arrangement of the rotation element and its associated buttons. For the reasons the parts being analogue to the input device 61 described with reference to Figs. 6 and 7 except for their position are indicated with reference numerals having an apostrophe.

The rotation element 64' and its associated buttons 71', 72', 73' are arranged in a position in the area of a thumb 10 of the hand 8 shown in Fig. 7. That is, the thumb 10 can operate the rotation element and the buttons in its area.

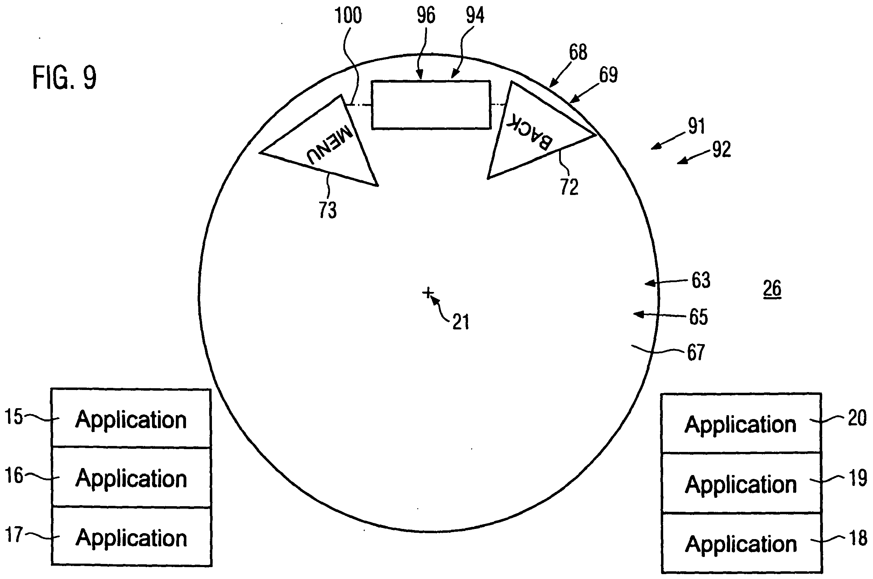

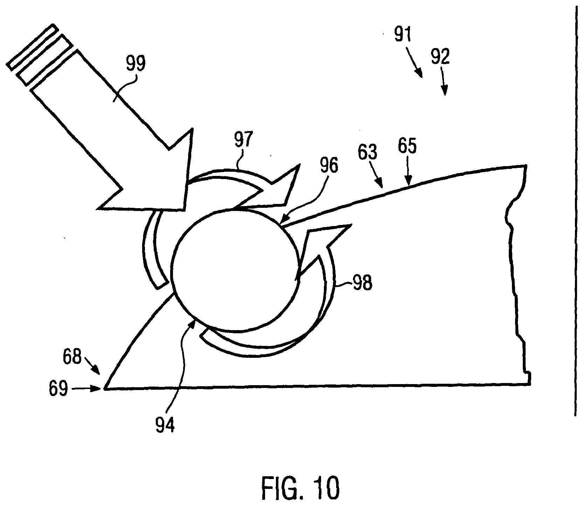

Figs 9 and 10 schematically show a multifunction input device 91 according to anembodiment of the present invention. In the following the differences of this input device 91 to the input device 61 described with reference to Figs. 6 and 7 are described.

Instead of a ring-like or disc-like shaped rotation element the input device 91 of the embodiment comprises a selection unit 92 having a barrel-like, preferably a cylinder-like, shaped rotation element 94 being rotatable to the main part 63. This circumferential surface of the rotation element 94 is its touch surface 96.

As shown by the arrows 97 and 98 in Fig. 10, the rotation element 94 can be bidirectionally continuously rotated. Further, the rotation element 94 is movable in a press button-like manner as indicated by the arrow 98. By a press button-like movement a special function can be realised, e.g. a "okay" function.

The rotational axis 100 of the rotation element 94 is also transversely inclined with respect to the middle axis 21 of the main part 63.

## Claims

1. Assembly comprising a) a plurality of systems of a power driven vehicle, the plurality of systems comprising an air-conditioning system, a navigation system, a board computer, a communication system, and an entertainment system and b) a multifunction input device (91) for operating the plurality of systems, the input device comprising a selection unit (92) with a rotation element (94) having a touch surface (96) being accessible during use of the input device, wherein an operation selection is made via the rotation of the rotation element, wherein the selection unit comprises a main part (63) with a touch surface (65) being accessible during use of the input device, the rotational axis (100) of the rotation element (94) is transversely inclined with respect to a middle axis (21) of the shape of the touch surface (65) of the main part (63), and wherein the rotation element (94) is rotatable with respect to the main part, wherein the main part (63) and the rotation element (94) are together transversely shiftable with respect to a basis (26) of the multifunction input device (91), which basis (26) carries the selection unit (92), by which movement a selection is made, wherein the rotation element (94) has a barrel-like shape and is movable in a press-button like manner with respect to the main part (63).

2. Assembly according to claim 1, wherein the main part (63) comprises a hand rest (67).

3. Assembly according to claim 1 or 2, wherein the main part (63) comprises at least one button (72, 73).

4. Assembly according to at least one of the preceding claims, wherein the rotation element has preferably a cylinder-like shape.

5. Assembly according to claim 4, wherein a part of the rotation element projects beyond the main part (63).

6. Assembly according to at least one of the preceding claims, wherein the rotation element (94) is arranged offset with respect to a middle of the main part (63).

7. Assembly according to at least one of the preceding claims, wherein the rotation element (94) is arranged at or near a margin (68) of the main part (63).

8. Assembly according to at least one of the preceding claims, wherein the touch surface (65) of the main part (63) has a general dome-like shape, preferably a spherical calotte-like shape.

9. Assembly according to claim 8, wherein the touch surface (96) of the rotation element (94) has a shape generally setting forth the shape of the touch surface of the main part.

10. Assembly according to one of the preceding claims, wherein a circumferential surface of the rotation element (94) is its touch surface (96).

11. Assembly according to one of the preceding claims, wherein the main part (63) comprises two buttons (72, 73) arranged on two sides of the rotation element (94).

12. Assembly according to claim 11, wherein said two buttons (72, 73) are arranged in an area of the main part (63) in which at least one finger of a hand is positioned when the input device is operated.

## Patentansprüche

1. Anordnung, umfassend a) eine Vielzahl von Systemen eines Kraftfahrzeugs, wobei die Vielzahl von Systemen ein Klimaanlagensystem, ein Navigationssystem, einen Bordcomputer, ein Kommunikationssystem und ein Unterhaltungssystem umfasst und b) eine Multifunktionseingabevorrichtung (91) zum Betreiben der Vielzahl von Systemen, wobei die Eingabevorrichtung eine Auswahleinheit (92) mit einem Drehelement (94) umfasst, das eine Touch-Oberfläche (96) aufweist, die während der Verwendung der Eingabevorrichtung zugänglich ist, wobei eine Betriebsauswahl über die Drehung des Drehelements vorgenommen wird, wobei die Auswahleinheit ein Hauptteil (63) mit einer Touch-Oberfläche (65) umfasst, die während der Verwendung der Eingabevorrichtung zugänglich ist, die Drehachse (100) des Drehelements (94) in Bezug auf eine Mittelachse (21) der Form der Touch-Oberfläche (65) des Hauptteils (63) quer geneigt ist und wobei das Drehelement (94) in Bezug auf das Hauptteil drehbar ist, wobei das Hauptteil (63) und das Drehelement (94) zusammen in Bezug auf eine Basis (26) der Multifunktionseingabevorrichtung (91) quer verschiebbar sind, wobei die Basis (26) die Auswahleinheit (92) trägt, durch deren Bewegung eine Auswahl vorgenommen wird, wobei das Drehelement (94) eine rollenartige Form aufweist und in Bezug auf das Hauptteil (63) wie ein Druckknopf bewegt werden kann.

2. Anordnung nach Anspruch 1, wobei das Hauptteil (63) eine Handauflage (67) umfasst.

3. Anordnung nach Anspruch 1 oder 2, wobei das Hauptteil (63) mindestens einen Knopf (72, 73) umfasst.

4. Anordnung nach mindestens einem der vorhergehenden Ansprüche, wobei das Drehelement vorzugsweise eine zylinderartige Form aufweist.

5. Vorrichtung nach Anspruch 4, wobei ein Teil des Drehelements über das Hauptteil (63) hinausragt.

6. Vorrichtung nach mindestens einem der vorhergehenden Ansprüche, wobei das Drehelement (94) in Bezug auf eine Mitte des Hauptteils (63) versetzt angeordnet ist.

7. Vorrichtung nach mindestens einem der vorhergehenden Ansprüche, wobei das Drehelement (94) bei oder in der Nähe von einem Rand (68) des Hauptteils (63) angeordnet ist.

8. Vorrichtung nach mindestens einem der vorhergehenden Ansprüche, wobei die Touch-Oberfläche (65) des Hauptteils (63) eine allgemein kuppelartige Form, vorzugsweise eine runde kalottenartige Form, aufweist.

9. Vorrichtung nach Anspruch 8, wobei die Touch-Oberfläche (96) des Drehelements (94) eine Form aufweist, die im Allgemeinen die Form der Touch-Oberfläche des Hauptteils darlegt.

10. Vorrichtung nach einem der vorhergehenden Ansprüche, wobei eine umlaufende Fläche des Drehelements (94) seine Touch-Oberfläche (96) ist.

11. Vorrichtung nach einem der vorhergehenden Ansprüche, wobei das Hauptteil (63) zwei Knöpfe (72, 73) umfasst, die an zwei Seiten des Drehelements (94) angeordnet sind.

12. Vorrichtung nach Anspruch 11, wobei die zwei Knöpfe (72, 73) in einem Bereich des Hauptteils (63) angeordnet sind, in dem mindestens ein Finger einer Hand positioniert ist, wenn die Eingabevorrichtung betrieben wird.

## Revendications

1. Ensemble comprenant a) une pluralité de systèmes d'un véhicule à entraînement mécanique, la pluralité de systèmes comprenant un système de climatisation, un système de navigation, un ordinateur de bord, un système de communication, et un système de divertissement et b) un dispositif d'entrée multifonction (91) destiné à actionner la pluralité de systèmes, le dispositif d'entrée comprenant une unité de sélection (92) avec un élément de rotation (94) ayant une surface de toucher (96) accessible pendant une utilisation du dispositif d'entrée, dans lequel une sélection d'actionnement est faite via la rotation de l'élément de rotation, dans lequel l'unité de sélection comprend une partie principale (63) avec une surface de toucher (65) accessible pendant une utilisation du dispositif d'entrée, l'axe de rotation (100) de l'élément de rotation (94) est incliné transversalement par rapport à un axe milieu (21) de la forme de la surface de toucher (65) de la partie principale (63), et dans lequel l'élément de rotation (94) peut être mis en rotation par rapport à la partie principale, dans lequel la partie principale (63) et l'élément de rotation (94) peuvent ensemble être déplacés transversalement par rapport à une base (26) du dispositif d'entrée multifonction (91), laquelle base (26) porte l'unité de sélection (92), mouvement par lequel une sélection est faite, dans lequel l'élément de rotation (94) a une forme semblable à un fût et peut être déplacé à la manière d'un bouton-poussoir par rapport à la partie principale (63).

2. Ensemble selon la revendication 1, dans lequel la partie principale (63) comprend un repose-main (67).

3. Ensemble selon la revendication 1 ou 2, dans lequel la partie principale (63) comprend au moins un bouton (72, 73).

4. Ensemble selon au moins l'une des revendications précédentes, dans lequel l'élément de rotation a de préférence une forme semblable à un cylindre.

5. Ensemble selon la revendication 4, dans lequel une partie de l'élément de rotation dépasse de la partie principale (63).

6. Ensemble selon au moins l'une des revendications précédentes, dans lequel l'élément de rotation (94) est agencé décalé par rapport à un milieu de la partie principale (63).

7. Ensemble selon au moins l'une des revendications précédentes, dans lequel l'élément de rotation (94) est agencé au niveau de ou près d'une marge (68) de la partie principale (63).

8. Ensemble selon au moins l'une des revendications précédentes, dans lequel la surface de toucher (65) de la partie principale (63) a une forme générale semblable à un dôme, de préférence une forme semblable à une calotte sphérique.

9. Ensemble selon la revendication 8, dans lequel la surface de toucher (96) de l'élément de rotation (94) a une forme incluant généralement la forme de la surface de toucher de la partie principale.

10. Ensemble selon l'une des revendications précédentes, dans lequel une surface circonférentielle de l'élément de rotation (94) est sa surface de toucher (96).

11. Ensemble selon l'une des revendications précédentes, dans lequel la partie principale (63) comprend deux boutons (72, 73) agencés sur deux côtés de l'élément de rotation (94).

12. Ensemble selon la revendication 11, dans lequel lesdits deux boutons (72, 73) sont agencés dans une zone de la partie principale (63) dans laquelle au moins un doigt d'une main est positionné lorsque le dispositif d'entrée est actionné.
